# EUROPÄISCHE PATENTANMELDUNG

(11) **EP 1 629 791 A1**
(43) Veröffentlichungstag der Anmeldung: **01.03.2006**
(21) Anmeldenummer: 04405542.4
(22) Anmeldetag: 31.08.2004
(51) Int. Cl.: A61C 8/00

(54) **Dentales Implantatsystem und Verfahren für Implantation und Aufbau des Implantatsystems**

(71) Anmelder: Denta Vision GmbH, 4665 Oftringen (CH)
(72) Erfinder: Schönenberger, Alwin, 8572 Berg (CH)
(74) Vertreter: Frei Patent Attorneys

(57) **Zusammenfassung**

Das dentale Implantatsystem weist ein Dentalimplantat (1) und ein Aufbauelement (2) auf. Das Implantat (1) hat einen rotationssymmetrischen, z.B. kreiszylindrischen, koronalen Implantatbereich (1.2) mit einer osseointegrativ ausgerüsteten Mantelfläche und das Aufbauelement (2) hat einen sich apikal erstreckenden Mantelbereich (2.1), der kappenförmig in einer frei wählbaren Drehposition auf den koronalen Implantatbereich (1.2) stülpbar ist, so dass er an der Implantatmantelfläche anliegt. Damit bildet die an der Mantelfläche des koronalen Implantatbereichs (1.2) anliegende Saumlinie (2.3) des Mantelbereichs (2.1) mit der genannten Mantelfläche den physiologisch relevanten Mikrospalt. Das Implantat (1) wird vorzugsweise für eine transmukosale Einheilung implantiert. Nach der Einheilung wird das Aufbauelement (2), dessen Saumlinie (2.3) z.B. dem Verlauf der natürlichen Knochenoberfläche um das Implantat entspricht, auf dem koronalen Implantatbereich (1.2) aufgesetzt, in einer Drehposition, derart, dass der Saumlinienverlauf auf den Verlauf der natürlichen Knochenoberfläche ausgerichtet ist, und derart, dass die Saumlinie (2.3) um die biologische Breite (D) über die natürliche Knochenoberfläche zu liegen kommt, was durch Wahl einer entsprechenden Breite des Mantelbereichs (2.1) erreicht wird.

## Beschreibung

Die Erfindung liegt auf dem Gebiete der Medizinaltechnik und betrifft ein dentales Implantatsystem nach dem Oberbegriff des ersten unabhängigen Patentanspruchs. Das dentale Implantatsystem weist ein Dentalimplantat und mindestens ein Aufbauelement auf, wobei das Implantat im wesentlichen den Wurzelbereich eines künstlichen Zahnes und das Aufbauelement mindestens den an den Wurzelbereich anschliessenden Teil des Kronenbereichs bildet. Die Erfindung betrifft ferner ein Verfahren und ein Kit nach den Oberbegriffen der entsprechenden, unabhängigen Patentansprüche, wobei das Verfahren für die Implantation und den Aufbau des Implantatsystems dient und das Kit für die Durchführung des Verfahrens geeignet ist.

Auf dem Dentalmarkt sind verschiedene Implantatsysteme verfügbar. Sie basieren beispielsweise auf einem Schraubenkörper, auf dem eine künstliche Krone entweder direkt oder indirekt über ein Zwischenstück (Abutment) aufgebaut wird. Zur Befestigung von Krone oder Zwischenstück weist der Schraubenkörper beispielsweise ein von der koronalen Stirnseite axial verlaufendes Innengewinde auf, in das für den Aufbau eine entsprechende Okklusalschraube eingeschraubt wird.

Der Schraubenkörper wird beispielsweise in einer entsprechend erstellten Öffnung im alveolären Knochen implantiert und für eine sogenannte, gedeckte Einheilung mit Weichgewebe bedeckt. Nach der Einheilung wird das Weichgewebe über dem Implantat entfernt und das Implantat wird aufgebaut, wobei die um den Umfang des aufgebauten Implantats verlaufende Trennlinie zwischen der koronalen Stirnseite des Implantats und dem Aufbauelement (Abutment oder Krone), der sogenannte Mikrospalt (micro gap), etwa in den Bereich der natürlichen Knochenoberfläche zu liegen kommt.

Bekannte Implantatsysteme weisen einen Mikrospalt auf, der durch eine koronale Stirnseite oder Schulter des Implantates vorgegeben ist und der in den meisten Fällen in einer Ebene senkrecht zur Implantatachse verläuft. Es zeigt sich, dass der Mikrospalt ein physiologisch relevantes Merkmal eines Dentalimplantes ist, denn bei natürlicher Belastung eines auf einem Implantat basierenden künstlichen Zahnes bildet sich das Knochengewebe derart zurück, dass der Mikrospalt, wie die natürliche Schmelz/Zement-Grenze, um durchschnittlich 2 bis 3 mm (biologische Breite, biological width) über der Knochenoberfläche liegt. Wenn also der Mikrospalt in einer senkrecht zur Implantatachse ausgerichteten Ebene liegt, wird sich das Knochengewebe derart einstellen, dass die Knochenoberfläche rund um das Implantat im wesentlichen ebenfalls in einer Ebene verläuft, wobei die Ebene der Knochenoberfläche gegenüber der Ebene des Mikrospaltes um die biologische Breite gegen den Apex des Implantates verschoben ist.

Natürlicherweise verlaufen die Schmelz/Zement-Grenze und die Knochenoberfläche aber nicht in einer Ebene um einen Zahn sondern girlandenförmig, das heisst, sie liegen zwischen den Zähnen weiter koronal und lingual/bukkal liegen sie weiter apikal. Diese Girlandenform geht bei der Verwendung von Implantatsystemen mit den genannten, entsprechend nahe an der Knochenoberfläche liegenden, "ebenen" Mikrospalten durch Knochenrückbildung verloren. Dieses Phänomen ist besonders ausgeprägt, wenn zwei oder mehr als zwei Implantate unmittelbar nebeneinander stehen.

Um die oben genannte, unerwünschte Wirkung von ebenen Mikrospalten zu vermeiden, sind in neuester Zeit auch Implantatsysteme bekannt geworden, die einen girlandenförmigen Mikrospalt vorgeben. Derartige Implantatsysteme sind beispielsweise beschrieben in der Publikation US-2004/0033470 A1 (Wohrle et al.). Das beispielsweise aus Titan bestehende Implantat weist einen Schraubenkörper auf, der mit einem Gewinde und einer die Osseointegration fördernden Oberfläche ausgerüstet ist, und einen am koronalen Ende des Schraubenkörpers anschliessenden Kragen, der eine koronale Stirnseite aufweist. Dabei ist die koronale Stirnseite nicht eben sondern hat in Anpassung an die Form eines natürlichen Kieferkammes eine wellige Form, das heisst eine girlandenförmige, den Mikrospalt vorgebende Aussenkante. Es wird auch vorgeschlagen, einen an die koronale Stirnseite grenzenden Bereich der Mantelfläche mit einer Breite, die etwa der biologischen Breite entspricht, als polierte Oberfläche (nicht osseointegrativ wirkend) auszurüsten und auch die um das Implantat verlaufende Grenzlinie zwischen osseointegrativer Oberfläche (Wurzelbereich) und polierter Oberfläche (Kragenbereich) etwa parallel zur Aussenkante der Stirnseite, also ebenfalls girlandenförmig zu gestalten. Auf diesem Implantat wird mittels Innengewinde und entsprechender Schraube ein Abutment montiert, dessen dem Implantat zugewandte Stirnseite an die koronale Stirnseite des Implantates angepasst, das heisst ebenfalls wellenförmig ausgestaltet ist.

Der Mikrospalt zwischen Implantat und Aufbauelement verläuft also gemäss US-2004/0033470 nicht in einer Ebene quer zur Implantatachse sondern ist durch seine Girlandenform bedeutend besser an die natürliche Form des Knochenkammes angepasst. Wenn das Implantat derart implantiert werden kann, dass der girlandenförmige Mikrospalt um die biologische Breite über der natürlichen Knochenoberfläche zu liegen kommt, kann ein Knochenabbau im wesentlichen verhindert werden. Dies ist nicht nur betreffend Stabilität des Implantates wünschenswert sondern auch aus ästhetischen Gründen. Wenn aber das Implantat schraubenförmig ist und durch Einschrauben im Knochengewebe verankert werden soll, wie dies in US-2004/0033470 beschrieben ist, ist eine entsprechende Implantation nur mit einer kaum realisierbaren Präzision möglich. Das Implantat muss nicht nur bezüglich Tiefe im Knochen bzw. relativ zur Knochenoberfläche sehr genau positioniert werden, sondern auch bezüglich Drehposition, nämlich derart, dass der Mikrospalt nicht nur um die biologische Breite über der Knochenoberfläche zu liegen kommt, sondern dass auch die Girlandenform des Mikrospaltes möglichst genau auf die entsprechende Form der natürlichen Knochenoberfläche ausgerichtet ist. Dazu ist es notwendig, die Verankerungstiefe sehr genau auf die Gewindesteigung abzustimmen, was nicht nur schwierig realisierbar, sondern, insbesondere bei Verwendung eines Gewindes mit relativ grosser Steigung auch eine relevante Einschränkung darstellen kann.

Die Erfindung stellt sich nun die Aufgabe, ein dentales Implantatsystem zu schaffen, mit dem es möglich wird, Lage und Verlauf des Mikrospaltes an die natürliche Form von alveolärem Knochen oder an andere Begebenheiten anzupassen mit einer Genauigkeit und Einfachheit, die mit bekannten Implantatsystemen nicht erreichbar sind.

Diese Aufgabe wird gelöst durch das dentale Implantatsystem, wie es in den Patentansprüchen definiert ist.

Das erfindungsgemässe Implantatsystem weist in an sich bekannter Weise ein Dentalimplantat und mindestens ein Aufbauelement auf. Neu am erfindungsgemässen Implantatsystem ist, dass Lage und Verlauf des Mikrospaltes vom Dentalimplantat weitgehend unabhängig sind und durch das Aufbauelement bestimmt werden. Dadurch kann der Mikrospalt an den natürlichen Verlauf der Grenze zwischen Hartgewebe und Weichgewebe oder an andere Begebenheiten angepasst werden, wenn das Implantat bereits eingeheilt ist, dann also, wenn Position und Ausrichtung des Implantates relativ zum natürlichen Knochen gegeben und im wesentlichen definitiv sind.

Das Dentalimplantat des erfindungsgemässen Implantatsystems weist einen koronalen Implantatbereich auf, der relativ zur Implantatachse rotationssymmetrisch (z.B. kreiszylindrisch) ist und der, wie der apikale Implantatbereich eine osseointegrativ ausgerüstete Mantelfläche aufweist. Das Implantat wird vorteilhafterweise für eine transmukosale Einheilung dimensioniert und implantiert, das heisst, seine koronale Stirnseite, die für die Befestigung des mindestens einen Aufbauelementes ausgerüstet ist, wird nach der Implantation ausserhalb von Knochen- und Weichgewebe liegen.

Das mindestens eine Aufbauelement des erfindungsgemässen Implantatsystems ist kappenförmig und wird über den koronalen Implantatbereich gestülpt. Wenn das kappenförmige Aufbauelement auf dem koronalen Implantatbereich aufgesetzt ist, umschliesst ein sich apikal erstreckender Mantelbereich des Aufbauelementes den koronalen Implantatbereich mindestes teilweise, wobei der Saum dieses Mantelbereichs zusammen mit der Mantelfläche des koronalen Implantatbereichs den Mikrospalt bildet. Während also an Implantatsystemen gemäss dem Stande der Technik immer die koronale Stirnseite oder eine stirnseitige Schulter des Implantates die Lage des Mikrospaltes bestimmt, ist der Mikrospalt des erfindungsgemässen Implantatsystems weitgehend unabhängig von dieser Stirnseite und kann auf der Mantelfläche des koronalen Implantatbereichs nach der Einheilung bezüglich Lage und Drehausrichtung in weiten Grenzen frei wählbar eingestellt werden. Dazu wird beispielsweise ein entsprechend vorfabriziertes Aufbauelement, dessen Saumlinie gegebenenfalls noch individuell bearbeitet wird, in einer einzig durch die Form der Saumlinie des Aufbauelementes bestimmten Drehposition auf dem koronalen Implantatbereich aufgesetzt, was dank der Rotationssymmetrie des koronalen Implantatbereichs möglich ist.

Das kappenförmige Aufbauelement ist beispielsweise als hülsenförmiges Zwischenstück (Mesiostruktur) ausgebildet, auf dem mittels Zement oder bukkaler Verschraubung oder Verbolzung mindestens ein weiteres Aufbauelement zu einer prothetischen Suprakonstruktion aufbaubar ist. Das kappenförmige Aufbauelement kann aber auch selbst diese Suprakonstruktion darstellen.

Vorteilhafterweise ist die koronale Stirnseite des Implantates derart ausgerüstet, dass nicht nur ein kappenförmiges Aufbauelement wie oben beschrieben darauf befestigbar ist, sondern auch ein von der Stirnseite des Implantats sich nur koronal erstrekkendes Aufbauelement, das anstelle des kappenförmigen Elements verwendet wird, wenn der Mikrospalt nicht weiter apikal als die Stirnseite des Implantats liegen soll.

Die Ausbildung des apikalen Implantatbereichs und die koronale Ausbildung des kappenförmigen Aufbauelementes als Mesiostruktur oder prothetische Suprakonstruktion sind nicht Gegenstand der Erfindung. Für diese Bereiche des erfindungsgemässen Implantatsystems wird auf die gängigen Methoden der Dentaltechnik verwiesen.

Beispielhafte Ausführungsformen des erfindungsgemässen dentalen Implantatsystems werden anhand der folgenden Figuren im Detail beschrieben. Dabei zeigen:
- **Figuren 1A bis 1C**: eine erste, sehr einfache Ausführungsform des erfindungsgemässen Implantatsystems und dessen Implantation und Aufbau;
- **Figuren 2A bis 2C**: eine bevorzugte Ausführungsform des erfindungsgemässen Implantatsystems als axialer Schnitt (Fig. 2A) und Querschnitt (Fig. 2B und 2C) durch den koronalen Implantatbereich und das darauf gesetzte, kappenförmige Aufbauelement;
- **Figur 3**: das Implantat gemäss Figuren 2A bis 2C mit einem Aufbauelement, das sich nur koronal von der Stirnseite des Implantats erstreckt;
- **Figuren 4 bis 6**: axiale Schnitte durch weitere, beispielhafte Ausführungsformen des erfindungsgemässen Implantatsystems bzw. Implantats.

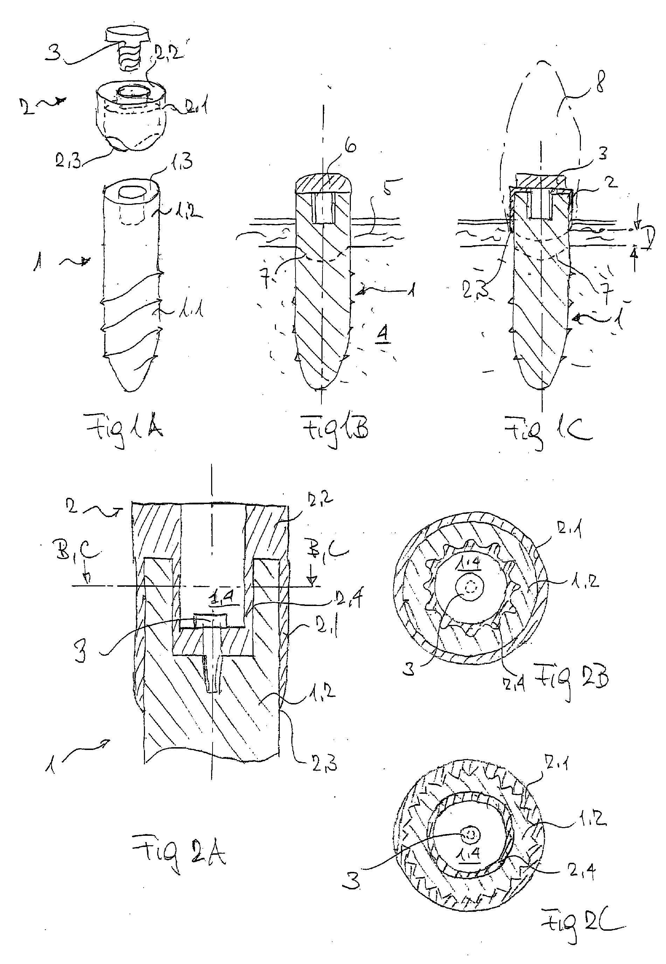

**Figuren 1A bis 1C** zeigen an einem sehr einfach ausgestalteten Beispiel des erfindungsgemässen Implantatsystems dessen Hauptmerkmale und dessen Implantation und Aufbau. Wie bereits weiter oben erläutert und wie aus Figur 1A ersichtlich ist, weist das erfindungsgemässe Implantatsystem ein Dentalimplantat 1 und ein kappenförmiges Aufbauelement 2 auf, wobei das Implantat 1 einen apikalen Bereich 1.1 und einen koronalen Bereich 1.2 mit einer koronalen Stirnseite 1.3 und das Aufbauelement 2 einen sich apikal erstreckenden Mantelbereich 2.1 und einen Stirnbereich 2.2 aufweist. Der koronale Implantatbereich 1.2, dessen Mantelfläche wie der apikale Implantatbereich eine osseointegrativ ausgerüstete Oberfläche aufweist, und der Mantelbereich 2.1 des Aufbauelements 2 sind derart aneinander angepasst, dass das Aufbauelement 2 auf dem koronalen Implantatbereich 1.2 in einer möglichst frei wählbaren Drehposition aufsetzbar ist, derart, dass der Mantelbereich 2.1 des Aufbauelements 2 eng (mit in der Zahntechnik üblicher Toleranz von weniger als ca. 50µm) an der Mantelfläche des koronalen Implantatbereichs 1.2 anliegt und der Stirnbereich 2.2 des Aufbauelements 2 mit geeigneten Mitteln (z.B. Okklusalschraube 3) auf der koronalen Stirnseite 1.3 des Implantats 1 befestigbar ist.

Das Implantat 1 besteht aus einem für Dentalimplantate üblicherweise verwendeten Material, vorzugsweise aus Titan oder aus einer Titanlegierung und seine Mantelfläche ist in an sich bekannter Weise für eine Förderung der Osseointegration ausgerüstet. Der apikale Implantatbereich 1.1 ist, ebenfalls in bekannter Weise, für eine Verankerung im Knochengewebe ausgerüstet, vorzugsweise ist er als Schraube, beispieslweise als selbstschneidende Schraube ausgebildet. Das kappenförmige Aufbauelement 2 besteht aus einem für künstliche Zahnaufbauten üblichen Material, beispielsweise aus Gold, aus einer hochgoldhaltigen Legierung, aus Zirkon oder Titan, aus einem Keramik-Metall-Verbund oder aus einem ausbrennbaren Kunststoff. Zur Befestigung des Aufbauelementes 2 auf der koronalen Stirnseite 1.3 des Implantats 1 weisen Implantat 1 und Aufbauelement 2 beispielsweise eine axiale Bohrung auf, die mindestens im Implantat mit einem Innengewinde ausgerüstet ist, und das Aufbauelement 2 wird mittels einer Okklusalschraube 3 am koronalen Implantatbereich 1.2 befestigt.

Eine den Mantelbereich 2.1 des Aufbauelementes 2 apikal abschliessende Saumlinie 2.3 verläuft vorteilhafterweise girlandenförmig. Damit das Aufbauelement 2 in einer möglichst frei wählbaren Drehposition auf dem koronalen Implantatbereich 1.2 aufsetzbar ist, ist die Rotationssymmetrie von koronalem Implantatbereich und Mantelbereich möglichst hochzählig, derart, dass sie durch Rotation um einen möglichst kleinen Winkel mit sich selbst in Deckung gebracht werden können. Der koronale Implantatbereich 1.2 ist beispielsweise kreiszylindrisch ausgebildet und der Mantelbereich 2.1 des Aufbauelements 2 bildet einen entsprechenden Hohlzylinder, was beliebig viele relative Drehpositionen von Implantat 1 und Aufbauelement 2 erlaubt.

Figur 1B zeigt das Implantat 1 der Figur 1A in einem implantierten Zustand (axialer Schnitt). Der schraubenförmige, apikale Implantatbereich 1.1 ist im Knochengewebe 4 verankert, der koronale Implantatbereich 1.2 reicht durch das Weichgewebe 5 hindurch und ist für die Einheilphase beispielsweise mit einer Einheilschraube 6 abgedeckt. Dabei verläuft die natürliche Knochenoberfläche beispielsweise girlandenförmig um das Implantat 1 herum, wie dies durch die Linie 7 angedeutet ist.

Nach der Einheilphase, die durch Figur 1B illustriert ist, wird die Einheilschraube 6 entfernt und wird das Aufbauelement 2 auf den koronalen Implantatbereich 1.2 aufgesetzt und mit der Okklusalschraube 3 befestigt, wie dies in der Figur 1C gezeigt ist. Durch Wahl eines entsprechenden Aufbauelements 2 und einer entsprechenden Drehposition des Aufbauelementes 2 beim Aufsetzten sowie gegebenenfalls durch eine vorgängige Bearbeitung der Saumlinie 2.3 kann der zwischen der Mantelfläche des koronalen Implantatbereichs 1.2 und dem Mantelbereich 2.1 des Aufbauelementes 2 sich entlang der Saumlinie 2.3 erstreckende Mikrospalt beispielsweise genau um die biologische Breite D (üblicherweise 2 bis 3 mm) über der natürlichen Knochenoberfläche (Linie 7) eingestellt werden, wodurch eine Knochenrückbildung weitgehend verhindert werden kann. Durch entsprechend tiefere Einstellung des Mikrospaltes bzw. der Saumlinie 2.3 kann auch ein gezielter Knochenabbau auf eine erwünschte Linie 7 um das Implantat 1 provoziert werden.

Das Aufbauelement 2 ist koronal gegebenenfalls als Mesiostruktur ausgestaltet, das heisst, es ist für das Aufsetzen eines weiteren Aufbauelements, z.B. einer Krone 8 ausgerüstet. Dazu weist das Aufbauelement 2 beispielsweise einen als Befestigungsmittel ausgestalteten, koronalen Bereich auf, an dem die Krone 8 beispielsweise mittels Zement oder lingualer Verschraubung oder Verbolzung befestigbar ist. Es ist auch möglich, die Okklusalschraube 3 als Befestigungsmittel für weitere Aufbauelemente zu verwenden, also beispielsweise in ihrem Kopfbereich mit einem Innengewinde zu versehen. Ein koronaler Bereich des Aufbauelements 2 kann aber auch direkt als vollständige Suprastruktur ausgebildet sein, die beispielsweise mittels okkluso-transversaler Verschraubung direkt am Implantat 1 befestigt wird.

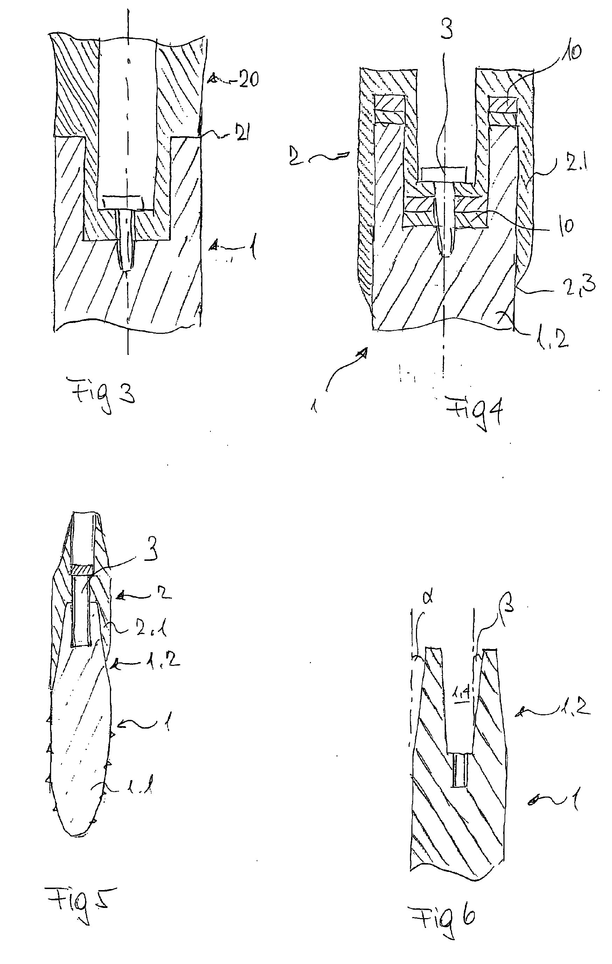

Figuren 2A bis 2C zeigen eine bevorzugte Ausführungsform des erfindungsgemässen Implantatsystems als axialer Schnitt (Figur 2A) und Querschnitt (Figuren 2B und 2C) durch den koronalen Implantatbereich 1.2 und das darauf aufgesetzte, kappenförmige Aufbauelement 2. Gleiche Elemente sind mit gleichen Bezugsziffern bezeichnet wie in den vorgängigen Figuren. Der koronale Implantatbereich 1.2 ist im vorliegenden Falle rohrförmig, das heisst mit einer axialen Vertiefung 2.4, ausgestaltet und der Stirnseitenbereich 2.2 des Aufbauelements 2 ist durch einen sich apikal erstreckenden, ebenfalls rohrähnlichen Fortsatz 2.4 an die Vertiefung 2.4 derart angepasst, dass der Fortsatz 2.4 in der Vertiefung 1.4 positionierbar ist und das Aufbauelement 2 mittels Okklusalschraube 3 auf dem Grund der Vertiefung 1.4 befestigbar ist.

Die Ausführung des koronalen Implantatbereichs 1.2 mit axialer Vertiefung 1.4, in die das Aufbauelement 2 hineinreicht, hat den Vorteil, dass radial auf das Implantatsystem wirkende Kraftkomponenten durch die ineinandergreifenden Bereiche von Implantat 1 und Aufbauelement 2 aufgenommen werden und dadurch nicht auf die Okklusalschraube 3 wirken. Diese muss also nur für die Aufnahme von Zugkräften ausgelegt werden, so dass sie verglichen mit bekannten Okklusalschrauben kleiner und insbesondere dünner sein kann, wodurch gegebenenfalls auch das Implantat gegenüber bekannten Implantaten reduziert werden kann. Ein weiterer Vorteil der versenkten Okklusalschraube 3 besteht darin, dass der koronale Implantatbereich 1.2 für eine gegebenenfalls notwendige Abwinklung (Achskorrektur) eines Aufbaus gegenüber der Implantatachse bearbeitet werden kann, ohne dass dadurch die Okklusalschraube 3 gefährdet würde.

Figuren 2B und 2C zeigen Mittel zur Fixierung der beim Aufsetzen des Aufbauelements 2 auf den koronalen Implantatbereich 1.2 gewählten relativen Drehpositionen von Implantat 1 und Aufbauelement 2. Dies sind gemäss Figur 2B axial verlaufende, ineinandergreifende Nuten und entsprechende Kämme auf der im wesentlichen kreiszylindrisch geformten Aussenoberfläche des Fortsatzes 2.4 des Aufbauelements 2 und der Innenoberfläche der axialen Vertiefung 1.4 des rohrförmig ausgebildeten, koronalen Implantatbereichs 1.2. Zur Erfüllung der geforderten Rotationssymmetrie sind alle Nuten und Kämme gleich und gleichmässig verteilt und für eine möglichst freie Wählbarkeit der Drehposition sind möglichst viele Nuten und Kämme vorgesehen. Gemäss Figur 2C sind die ineinandergreifenden Nuten und Kämme an der im wesentlichen zylindrischen Innenoberfläche des Hohlraums im Mantelbereich 2.1 des Aufbauelements 2 und auf der ebenfalls im wesentlichen zylindrischen Mantelfläche des koronalen Implantatbereichs angeordnet. Es sind auch Ausführungsformen denkbar, in denen sowohl innen als auch aussen am rohrförmigen, koronalen Implantatbereich 1.2 und an den entsprechenden Flächen des Aufbauelements 2 Nuten und Kämme vorgesehen sind.

Implantate 1 und Aufbauelemente 2 für erfindungsgemässe Implantatsysteme, wie sie beispielsweise in den Figuren 2A bis 2C dargestellt sind, werden vorteilhafterweise in verschiedenen Grössen vorfabriziert, das heisst Implantate mit Längen von 10, 12, 14 und 16 mm und mit je einem gleichen koronalen Implantatbereich. Dazu werden an den genormten, koronalen Implantatbereich angepasste Aufbauelemente vorfabriziert. Diese haben beispielsweise ebene, gegebenenfalls später zu bearbeitende Saumlinien und verschiedene Verwinkelungen von beispielsweise 0°, 10° oder 20°. Oder sie haben dem Knochenverlauf um Schneidezähne, Eckzähne und Seitenzähne entsprechende Saumlinien und/oder Mantelbereiche mit verschiedenen axialen Breiten. Ein geeignetes Implantat wird implantiert und anhand eines Abdrucks, der nach der Einheilung angefertigt wird, wird ein Aufbauelement ausgewählt und seine günstigste Drehposition relativ zum Implantat bestimmt. Anhand des Abdrucks wird auch bestimmt, wie die Saumlinie des vorfabrizierten Aufbauelementes zu bearbeiten ist, und gegebenenfalls, wie der koronale Implantatbereich für eine Verwinkelung zu bearbeiten ist. Es ist selbstverständlich auch möglich, in jedem Fall anhand des Abdruckes ein Aufbauelement 2 herzustellen.

**Figur 3** zeigt, dass das Implantat 1 des erfindungsgemässen Implantatsystems auch mit einem sich nur koronal von der Stirnseite des Implantats erstreckenden Aufbauelement 20, das im Unterschied zum kappenförmigen Aufbauelement 2 keinen Mantelbereich aufweist, kombiniert werden kann. Der Mikrospalt ist in diesem Falle, wie bei bekannten Implantaten, durch die Aussenkante 21 der Stirnseite des Implantates bestimmt und verläuft beispielsweise in einer Ebene. Die Variante gemäss Figur 3 gibt aber dem erfindungsgemässen Implantatsystem eine weitere Flexibilität, denn es kann nach erfolgter Einheilung entschieden werden, ob ein kappenförmiges Aufbauelement oder das sich nur koronal erstreckende Aufbauelement 20 verwendet werden soll, ob also der Mikrospalt von der Stirnseite des Implantats apikal verschoben sein soll oder nicht.

**Figur 4** illustriert eine weitere Methode, mit der an einer Kombination eines vorfabrizierten Implantats 1 und eines vorfabrizierten Aufbauelements 3, die im wesentlichen ausgestaltet sind, wie im Zusammenhang mit den Figuren 2A bis 2C weiter oben beschrieben ist, die Lage der Saumlinie 2.3 des Aufbauelementes 2 auf der Mantelfläche des koronalen Implantatbereichs 1.2 eingestellt werden kann. Es werden dazu auf dem Grund der axialen Vertiefung 1.4 und/oder auf der koronalen Implantatstimseite Distanzringe 10 eingelegt und es wird gegebenenfalls eine entsprechend längere Okklusalschraube 3 verwendet.

**Figur 5** zeigt eine weitere, beispielhafte Ausführungsform des erfindungsgemässen Implantatsystems, das wiederum ein Implantat 1 und ein kappenförmig ausgestaltetes Aufbauelement 2 aufweist. Im Unterschied zu den vorgehend beschriebenen Ausführungsformen ist der koronale Implantatbereich 1.2 nicht zylindrisch ausgestaltet sondern als sich gegen die koronale Stirnseite verjüngender Kreiskegelstumpf, über den der Mantelbereich 2.1 des Aufbauelementes 2 in der beschriebenen Weise kappenartig gestülpt ist. Der Kegelstumpf ist vorteilhafterweise steil (kleiner Winkel zwischen Mantelfläche und Parallelen zur Implantatachse) und schliesst in jedem Falle ohne flachere Abstützschulter direkt an den apikalen Implantatbereich 1.1 an. Auch hier ist die relative Drehposition von Implantat 1 und Aufbauelement 2 bzw. girlandenförmiger Saumlinie 2.3 frei wählbar und gegebenenfalls durch axiale, ineinander greifende Nuten und Kämme fixierbar und kann die Saumlinie 2.3 gegebenenfalls durch entsprechende Bearbeitung des Mantelbereiches 2.1 an natürliche oder erwünschte Begebenheiten angepasst werden.

**Figur 6** zeigt eine weitere Ausführungsform eines Implantates 1 für das erfindungsgemässe Implantatsystem, das im wesentlichen ausgerüstet ist, wie das Implantat gemäss Figuren 2A bis 2C oder 3. Im Gegensatz zu den Implantaten der genannten Figuren ist im vorliegenden Fall nicht nur der koronale Implantatbereich 1.2 als steiler Kegelstumpf ausgebildet, wie dies auch in Figur 5 gezeigt ist, sondern auch die axiale Vertiefung 1.4 ist als Hohlkegel ausgebildet. Die Steilheit des Kegelstumpfes, der den koronalen Implantatbereich 1.2 bildet, ist definiert durch den Winkel α, zwischen der Kegelmantelfläche und einer Parallelen zur Implantatachse. Dieser Winkel α soll vorteilhafterweise nicht grösser als 10° sein, insbesondere nicht grösser als 6°. Die durch den entsprechenden Winkel β definierte Steilheit des Hohlkonus (axiale Vertiefung 1.4) kann gleich sein wie die Steilheit des koronalen Implantatbereichs oder weniger steil.

## Patentansprüche

1. Dentales Implantatsystem, das ein Dentalimplantat (1) und mindestes ein Aufbauelement (2) aufweist, wobei das Aufbauelement auf einer koronalen Stirnseite des Implantats (1) befestigbar ist, **dadurch gekennzeichnet, dass** das Implantat (1) einen koronalen Implantatbereich (1.2) mit einer relativ zu einer Implantatachse rotationssymmetrischen Form und einer osseointegrativ ausgerüsteten Mantelfläche aufweist, dass das Aufbauelement (2) einen apikalen Mantelbereich (2.1) aufweist und dass das Aufbauelement (2) und der koronale Implantatbereich (1.2) dreart aneinander angepasst sind, dass der Mantelbereich (2.1) kappenartig über den koronalen Implantatbereich (1.2) stülpbar ist, wobei eine Drehposition des Aufbauelements (2) relativ zum Implantat (1) wählbar ist und eine Saumlinie (2.3) des Mantelbereichs (2.1) an der Mantelfläche des koronalen Implantatbereichs (1.2) anliegt und zusammen mit dieser Mantelfläche einen Mikrospalt bildet.

2. Implantatsystem nach Anspruch 1, **dadurch gekennzeichnet, dass** die Saumlinie (2.3) girlandenförmig ist.

3. Implantatsystem nach Anspruch 2, **dadurch gekennzeichnet, dass** die Saumlinie (2.3) im wesentlichen dem Verlauf (7) einer natürlichen Knochenoberfläche um einen Schneidezahn, Eckzahn oder Seitenzahn entspricht.

4. Implantatsystem nach einem der Ansprüche 1 bis 3, **dadurch gekennzeichnet, dass** der koronale Implantatbereich (1.2) im wesentlichen die Form eines Kreiszylinders oder eines sich in koronaler Richtung verjüngenden Kreiskegelstumpfes aufweist.

5. Implantatsystem nach einem der Ansprüche 1 bis 4, **dadurch gekennzeichnet, dass** der koronale Implantatbereich (1.2) rohrförmig ist und eine rotationssymmetrische, axiale Vertiefung (1.4) umschliesst, dass das Aufbauelement (2) einen in die axiale Vertiefung (1.4) einschiebbaren Fortsatz (2.4) aufweist und dass das Aufbauelement (2) im Bereich der axialen Vertiefung (1.4) am Implantat (1) befestigbar ist.

6. Implantatsystem nach Anspruch 5, **dadurch gekennzeichnet, dass** die axiale Vertiefung (1.4) die Form eines Hohlzylinders oder Hohlkegels aufweist.

7. Implantatsystem nach Anspruch 5 oder 6, **dadurch gekennzeichnet, dass** das Aufbauelement mittels einer Okklusalschraube (3) am Implantat befestigbar ist.

8. Implantatsystem nach einem der Ansprüche 5 bis 7, **dadurch gekennzeichnet, dass** an der Mantelfläche des koronalen Implantatbereichs (1.2) und an der Innenoberfläche des Mantelbereichs (2.1) und/oder an der Innenoberfläche der axialen Vertiefung (1.4) des koronalen Implantatbereichs (1.2) und an der Aussenoberfläche des Fortsatzes (2.4) Mittel zur Fixierung der Drehposition des Aufbauelementes (2) relativ zum Implantat (1) vorgesehen sind.

9. Implantatsystem nach Anspruch 8, **dadurch gekennzeichnet, dass** die Mittel zur Fixierung der Drehposition eine Mehrzahl von gleichen, gleichmässig verteilten, axial verlaufenden, ineinandergreifenden Nuten und Kämmen ist.

10. Implantatsystem nach einem der Ansprüche 1 bis 9, **dadurch gekennzeichnet, dass** das Aufbauelement (2) eine für einen weiteren Aufbau ausgerüstete Mesiostruktur oder eine vollständige prothetische Suprakonstruktion ist.

11. Implantatsystem nach einem der Ansprüche 1 bis 10, **dadurch gekennzeichnet, dass** das Implantat (1) einen schraubenförmigen, apikalen Implantatbereich (1.1) aufweist.

12. Dentalimplantat **gekennzeichnet, durch** einen koronalen Implantatbereich (1.2), der relativ zu einer Implantatachse rotationssymmetrisch ist, der eine osseointegrativ ausgerüstete Mantelfläche aufweist sowie eine koronale Stirnseite mit einer ebenfalls rotationssymmetrischen, axialen Vertiefung (1.4), auf deren Grund ein Befestigungsmittel für ein Aufbauelement vorgesehen ist.

13. Dentalimplantat nach Anspruch 12, **dadurch gekennzeichnet, dass** auf der Mantelfläche des koronalen Implantatbereichs und/oder auf der Innenoberfläche der axialen Vertiefung (1.4) Mittel zur Fixierung einer Drehposition eines auf den koronalen Implantatbereich (1.2) gestülpten Aufbauelements bzw. eines in die axiale Vertiefung eingesteckten Aufbauelements aufweist.

14. Implantat nach Anspruch 12 oder 13, **dadurch gekennzeichnet, dass** die Mittel zur Fixierung der Drehposition axial verlaufende Nuten oder Kämme sind.

15. Verfahren für die Implantation und den Aufbau eines Implantatsystems nach einem der Ansprüche 1 bis 11, mit den folgenden Schritten:
(a) Implantation des Implantates (1) in alveolarem Knochengewebe (4), derart, dass der koronale Implantatbereich aus dem Knochengewebe (4) und durch das Weichgewebe (5) ragt;
(b) nach der Einheilung des Implantates (1) Herstellung oder Auswahl und gegebenenfalls Bearbeitung des Aufbauelementes (2) derart, dass seine Saumlinie (2.3) dem natürlichen Verlauf oder einem erwünschten Verlauf der Knochenoberfläche (7) um das Implantat (1) entspricht und um eine biologische Breite (D) über dem genannten Verlauf positionierbar ist,
(c) Positionierung des Aufbauelements (2) auf dem koronalen Implantatbereich (1.2) in einer Drehposition, in der die Saumlinie (2.3) auf den genannten Verlauf der Knochenoberfläche (7) ausgerichtet ist, und
(d) Befestigung des Aufbauelementes (2) auf dem koronalen Implantatbereich (1.2).

16. Verfahren nach Anspruch 15, **dadurch gekennzeichnet, dass** der Schritt der Herstellung oder Auswahl und gegebenenfalls Bearbeitung des Aufbauelementes (2) ein mit einer Abwinkelung auf dem implantierten Implantat (1) positionierbares Aufbauelement (2) betrifft.

17. Verfahren nach einem der Ansprüche 15 oder 16, **dadurch gekennzeichnet, dass** für die Einstellung der Saumlinie (2.3) auf die biologische Breite (D) über dem genannten Verlauf mindestens ein Distanzring (10) zwischen dem koronalen Implantatbereich (1.2) und dem Aufbauelement (2) positioniert wird.

18. Kit zur Durchführung des Verfahrens nach Anspruch 15, welches Kit eine Mehrzahl von Implantaten mit je dem gleichen koronalen Implantatbereich (1.2) und eine Mehrzahl von Aufbauelementen (2) mit an den koronalen Implantatbereich (1.2) angepassten Mantelbereichen (2.1) aufweist.

19. Kit nach Anspruch 18, **dadurch gekennzeichnet, dass** die Aufbauelemente (2) gleiche, bearbeitbare Mantelbereiche (2.1) aufweisen.

20. Kit nach Anspruch 19, **dadurch gekennzeichnet, dass** die Aufbauelemente (2) verschiedene Abwinkelungen aufweisen.

21. Kit nach Anspruch 18, **dadurch gekennzeichnet, dass** die Mantelbereiche (2.1) der Aufbauelemente (2) sich bezüglich axialer Breite und/oder Saumlinienverlauf voneinander unterscheiden.

22. Kit nach Anspruch 21, **dadurch gekennzeichnet, dass** die Saumlinien (2.3) der Aufbauelemente (2) in etwa verlaufen wie die natürliche Knochenoberfläche um einen natürlichen Schneidezahn, um einen Eckzahn oder um einen Seitenzahn.

23. Kit nach einem der Ansprüche 18 bis 22, **dadurch gekennzeichnet, dass** es ferner für die Einstellung der Lage der Saumlinie (2.3) um den koronalen Implantatbereich (1.2) Distanzringe (10) aufweist.

24. Kit nach einem der Ansprüche 18 bis 23, **dadurch gekennzeichnet, dass** es zusätzliche Aufbauelemente (20) aufweist, die keine Mantelbereiche haben und die in derselben Weise an den koronalen Implantatbereichen (1.2) befestigbar sind wie die Aufbauelemente (2) mit Mantelbereichen (2.1).
